Europäisches Patentamt

European Patent Office

Office européen des brevets

(11) Veröffentlichungsnummer: **0 186 046 B1**

# EUROPÄISCHE PATENTSCHRIFT

(45) Veröffentlichungstag der Patentschrift: **08.05.91**

(51) Int. Cl.5: **B23K 35/30, C22C 19/05**

(21) Anmeldenummer: 85115769.3

(22) Anmeldetag: **11.12.85**

(54) **Metallischer Verbindungswerkstoff.**

(30) Priorität: **20.12.84 DE 3446479**

(43) Veröffentlichungstag der Anmeldung:
**02.07.86 Patentblatt 86/27**

(45) Bekanntmachung des Hinweises auf die
Patenterteilung:
**08.05.91 Patentblatt 91/19**

(84) Benannte Vertragsstaaten:
**DE GB NL**

(56) Entgegenhaltungen:
**DE-A- 2 025 833**
**FR-A- 2 397 259**
**US-A- 3 696 500**
**US-A- 3 820 961**
**US-A- 4 096 615**

**Metall Progress, June 1979, S. 100/101**

(73) Patentinhaber: **BBC Brown Boveri AG**
**Haselstrasse**
**CH-5401 Baden(CH)**

(72) Erfinder: **Jahnke, Bernd, Dr. Dipl.-Phys.**
**Adalbert-Seifriz-Strasse 10**
**W-6903 Neckargemünd(DE)**

(74) Vertreter: **Dahlmann, Gerhard, Dipl.-Ing. et al**
**c/o Brown Boveri & Cie., AG Zentralbereich**
**ZPT/P Postfach 351**
**W-6800 Mannheim(DE)**

## Beschreibung

Die Erfindung bezieht sich auf einen metallischen Verbindungswerkstoff gemäß dem Oberbegriff des Patentanspruches 1.

Ein solcher metallischer Verbindungswerkstoff findet insbesondere bei der Verbindung von Bauteilen aus oxiddispersionsgehärteten Legierungen eine Anwendung. Vorzugsweise werden mit diesem Verbindungswerkstoff Bauteile zur Bildung von Lauf- und Leitschaufeln sowie Wärmestausegmente von Gasturbinen zusammengefügt. Komplexe Bauteile aus oxiddispersionsgehärteten Legierungen können nicht gegossen werden. Sie müssen aus zwei oder mehreren Bauteilen zu einem endgültigen Bauteil zusammengefügt werden. Die Bildung von Bauteilen aus oxiddispersionsgehärteten Legierungen beginnt mit der Herstellung des die Legierung bildenden Pulvers. Die Metalle bzw. Metallverbindungen, welche bei der Pulverherstellung zum Einsatz kommen, werden in einer Hochenergiemühle mechanisch legiert. Aus dem so gewonnenen Pulver werden zunächst Grundkörper durch Extrudieren hergestellt. Die Grundkörper werden anschließend durch Schmieden, Walzen und/oder mechanische Bearbeitung zu Bauelementen weiter verarbeitet. Diese werden dann mittels metallischen Verbindungswerkstoffen z. B. über einen Hochtemperaturlötprozeß zu Lauf- und Leitschaufeln oder anderen Bauelementen, z.B. für Gasturbinen zusammengefügt.

Unter der Bezeichnung TD6 ist ein metallischer Verbindungswerkstoff bekannt, der im wesentlichen aus 16 Gew.% Chrom, 4 Gew.% Silizium, 5 Gew.% Wolfram und 17 Gew.% Molybdän und Nickel besteht, wobei der restliche Anteil Nickel ist. Ein weiterer Verbindungswerkstoff der unter der Bezeichnung AMDRY 400 im Handel erhältlich ist, besteht aus 16,5 Gew.% Nickel, 19 Gew.% Chrom, 0,8 Gew.% Bor, 8 Gew.% Silizium und 4 Gew.% Wolfram wobei der Rest durch Chrom gebildet wird. Ein dritter Verbindungswerkstoff mit der Bezeichnung AMDRY 788 enthält 21 Gew.% Nickel, 22 Gew.% Chrom, 2 Gew.% Bor, 2 Gew.% Silizium, 14 Gew.% Wolfram. Der restliche Anteil besteht aus Kobalt. Diese im Handel erhältlichen Verbindungswerkstoffe erfüllen die an sie gestellten Anforderungen nicht.

Aus der Informationsschrift "Guide to Selection of Superalloys", June, 1979, Page 100 and 101, ist eine Superlegierung bekannt, die 16 Gew.% Chrom, 3,4 Gew.% Aluminium und 3,4 Gew.% Titan neben weiteren Bestandteilen aufweist.

Aus der US-A-3,696,500 ist ein Lotmaterial bekannt, das neben anderen Bestandteilen Chrom mit nicht mehr als 16 Gew.% und Aluminium mit weniger als 4 Gew.% aufweist.

In der US-A-4,096,615 ist ein Hartlötpulver beschrieben, das 10 Gew.% Chrom enthält. Eine andere Ausführungsform dieses Lotpulvers enthält 12.7% Chrom dafür jedoch Titan und Aluminium.

Die für Turbinenanwendungen geforderte Hochtemperaturkorrosionsbeständigkeit kann nur durch einen erhöhten Legierungsanteil von Chrom > 16 % sowie Anteile von Ti und Aluminium erfüllt werden. Das für die Ausbildung einer oxidationsbeständigen Deckschicht erforderliche Aluminium ist in keiner der bekannten Lotlegierungen in ausreichendem Maß ( ≥ 4 % ) vorhanden. Da hohe Gehalte an Silizium auf der Grundlage der bekannten Phasendiagramme NiCrSi die erhöhte Gefahr von Sprödphasenbildung ergeben wie z. B. die Sigma Phase und Borgehalte ≥ 2 % zu einer starken unerwünschten Anlösung des Grundwerkstoffs führen, sollte der Gehalt von Si auf ≤ 4% und von Bor auf ≤ 2 % beschränkt werden. Diese Konzentrationen können aber auch nicht wesentlich unterschritten werden, da hierdurch der Schmelzpunkt des Lotes eingestellt wird. Die Verbindungswerkstoffe mit einem zu hohen Refratärgehalt, insbesondere einem zu hohen Gehalt an Wolfram, Molybdän und Tantal sind häufig nicht schutzschichtverträglich.

Der Erfindung liegt deshalb die Aufgabe zugrunde, einen metallischen Verbindungswerkstoff, insbesondere ein Lot für Bauelemente aus oxiddispersionsgehärteten Legierungen zu schaffen, mit dem diese dauerhaft verbindbar sind, so daß sie allen unter Betriebsbedingungen auftretenden Anforderungen genügen.

Diese Aufgabe wird erfindungsgemäß durch die kennzeichnenden Merkmale des Patentanspruches 1 gelöst.

Der erfindungsgemäße Verbindungswerkstoff weist Festigkeitskennwerte auf, die denen entsprechen, welche die miteinander zu verbindenden Bauteile unter statischer und dynamischer Belastung selbst aufweisen. Die mit dem erfindungsgemäßen Lot gebildeten Fügebereiche weisen eine aureichende Oxidations- und Korrossionsstabilität auf. Die Grundwerkstoffe der durch das Lot miteinander verbundenen Bauteile wird durch selbiges nicht übermäßig angelöst oder zerstört. Die Diffussionsstabilität des durch die Verwendung des metallischen Verbindungswerkstoffes gebildeten Fügebereichs ist auch bei Temperaturen über 1000 °C gewährleistet.

Mit dem erfindungsgemäßen Lot können auch größere Komponenten aus oxiddispersionsgehärteten Legierungen alleine oder unter Verwendung von anderen Bauteilen, die aus einer anderen Superlegierung gegossen sind, gebildet werden.

Eine besonders gute Verbindung zwischen Bauteilen aus oxiddispersionsgehärteten Legierungen auf der Basis von Nickel wird unter der Verwendung eines metallischen Verbindungswerkstoffes erreicht, der neben Chrom, Silizium, Nickel, Bor und Aluminium Zusätze von Tantal, Kobalt und Zirkonium oder Lanthan enthält.

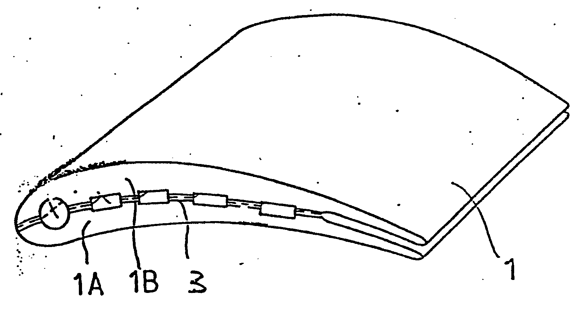

In der Figur ist eines mit einem heißen Gas in Berührung kommendes Bauteil 1 einer Gasturbine dargestellt. Bei dem Bauteil handelt es sich um das Blatt einer gekühlten Gasturbinenschaufel. Sie wird aus zwei Blatthälften gebildet, die aus extrudierten Rohlingen beschmiedet, oder mechanisch bearbeitet sind. Für die Fertigung der hier dargestellten Blatthälften bzw. Bauelemente 1A und 1B wurde eine oxiddispersionsgehärtete Legierung verwendet, die aus 13 bis 17 Gew.% Chrom, 2,5 bis 6 Gew.% Aluminium, 2 bis 4,24 Gew.% Titan, 0,4 bis 0,45 Gew.% Molybdän, 3,75 bis 6,25 Gew.% Wolfram, 0,1 bis 0,3 Gew.% Tantal, 0,02 bis 0,5 Gew.% Zirkonium, 0,01 bis 0,02 Gew.% Bor, 0,02 bis 2 Gew.% Yttrium sowie Nickel besteht. Die angegebenen Gewichtsmengen beziehen sich auf das Gesamtgewicht der Legierung. Die so gefertigten Bauelemente 1A und 1B werden unter Verwendung des erfindungsgemäßen metallischen Verbindungswerkstoffes 3 miteinander verbunden, das zwischen die Bauelemente gelegt wird, die anschließend miteinander verlötet werden. Der hier verwendete metallische Verbindungswerkstoff enthält 20 Gew.% Chrom, zwischen 1 und 30 Gew.% Kobalt, 1,5 Gew.% Bor, 4 Gew.% Silizium, 4 Gew.% Wolfram, Molybdän und Tantal, 1 Gew.% Eisen, 0,1 Gew.% Stickstoff, 0,4 Gew.% Sauerstoff, 0,015 Gew.% Kohlenstoff, zwischen 5 und 7 Gew.% Aluminium, 1 Gew.% Titan und 0,5 Gew.% Zirkonium.

### Ansprüche

1. Metallischer Verbindungswerkstoff mit Bestandteilen an Nickel und Chrom gekennzeichnet durch einen Anteil von 20 Gew.% Chrom, 1 bis 30 Gew.% Kobalt, 1,5 Gew.% Bor, 4 Gew.% Silizium, 4 Gew.% Wolfram, Molybdän und Tantal, 1 Gew. % Eisen, 0,1 Gew.% Stickstoff, 0,4 Gew.% Sauerstoff, 0,015 Gew.% Kohlenstoff, 5 bis 7 Gew.% Aluminium, 1 Gew.% Titan und 0,5 Gew.% Zirkonium, wobei der restliche Anteil aus Nickel bezogen auf das Gesamtgewicht der Legierung besteht.

2. Metallischer Verbindungswerkstoff mit Bestandteilen an Nickel und Chrom gekennzeichnet durch einen Anteil von 20 Gew.% Chrom, 1 bis 30 Gew.% Kobalt, 1,5 Gew.% Bor, 4 Gew.% Silizium, 4 Gew.% Wolfram, Molybdän und Tantal, 1 Gew.% Eisen, 0,1 Gew.% Stickstoff, 0,4 Gew.% Sauerstoff, 0,015 Gew.% Kohlenstoff, 5 bis 7 Gew.% Aluminium, 1 Gew.% Titan und 0,1 Gew.% Lantan sowie einem restlichen Anteil an Nickel bezogen auf das Gesamtgewicht der Legierung.

### Claims

1. Metallic joining material having constituents of nickel and chromium, characterized by a portion of 20 % by weight of chromium, 1 to 30 % by weight of cobalt, 1.5 % by weight of boron, 4 % by weight of silicon, 4 % by weight of tungsten, molybdenum and tantalum, 1 % by weight of iron, 0.1 % by weight of nitrogen, 0.4 % by weight of oxygen, 0.015 % by weight of carbon, 5 to 7 % by weight of aluminium, 1 % by weight of titanium and 0.5 % by weight of zirconium, the remaining portion consisting of nickel relative to the total weight of the alloy.

2. Metallic joining material having constituents of nickel and chromium, characterized by a portion of 20 % by weight of chromium, 1 to 30 % by weight of cobalt, 1.5 % by weight of boron, 4 % by weight of silicon, 4 % by weight of tungsten, molybdenum and tantalum, 1 % by weight of iron, 0.1 % by weight of nitrogen, 0.4 % by weight of oxygen, 0.015 % by weight of carbon, 5 to 7 % of aluminium, 1 % by weight of titanium and 0.1 % by weight of lanthanum as well as a remaining portion of nickel relative to the total weight of the alloy.

### Revendications

1. Matériau de liaison métallique avec des constituants nickel et chrome, *caractérisé* par une teneur de 20 % en poids en chrome, de 1 à 30 % en poids en cobalt, de 1,5 % en poids en bore, de 4 % en poids en silicium, de 4 % en poids en tungstène, mobybdène et tantale, de 1 % en poids en fer, de 0,1 % en poids en azote, de 0,4 % en poids en oxygène, de 0,015 % en poids en carbone, de 5 à 7 % en poids en aluminium, de 1 % en poids en titane et de 0,5 % en poids en zirconium, la partie restante consistant en nickel et les pourcentages étant rapportés au poids total de l'alliage.

2. Matériau de liaison métallique avec des constituants nickel et chrome, *caractérisé* par une teneur de 20 % en poids en chrome, de 1 à 30 % en poids en cobalt, de 1,5 % en poids en bore, de 4 % en poids en silicium, de 4 % en poids en tungstène, mobybdène et tantale, de 1 % en poids en fer, de 0,1 % en poids en azote, de 0,4 % en poids en oxygène, de 0,015 % en poids en carbone, de 5 à 7 % en poids en aluminium, de 1 % en poids en titane et de 0,1 % en poids en lanthane, et par une partie restante en nickel, les pourcentages étant rapportés au poids total de l'alliage.

1A   1B   3   1